# EUROPÄISCHE PATENTSCHRIFT

(11) **EP 3 042 937 B1**
(45) Veröffentlichungstag und Bekanntmachung des Hinweises auf die Patenterteilung: **18.11.2020**
(21) Anmeldenummer: 15150672.2
(22) Anmeldetag: 09.01.2015
(51) Int. Cl.: C09D 13/00

(54) **Mine oder Kreide enthaltend Graphit und ein polymeres Bindemittel und Stift mit einer Graphitmine**
Lead or chalk containing graphite and a polymer binding agent and pencil with a graphite lead
Graphite comprenant une mine ou de la craie et liant polymère et crayon doté d'une mine en graphite

(43) Veröffentlichungstag der Anmeldung: 13.07.2016
(73) Patentinhaber: Faber- Castell AG, 90546 Stein (DE)
(72) Erfinder: Barroso, Vladimir Dr., 13561-358 Sao Carlos-Sp-Brazil (BR); Merola, Eder D.J., 13560-340 Sao Carlos-Sp-Brazil SP (BR); de Barros Bartholomeu, Cláudio, 13561-359 Sao Carlos-Sp-Brazil (BR)
(74) Vertreter: Schlögl, Markus

(56) Entgegenhaltungen:
- EP-A1- 2 551 307
- CN-A- 102 001 249
- CN-A- 103 847 300
- DE-A1-102004 021 048
- US-A- 3 262 904

## Beschreibung

Die Erfindung betrifft eine Graphit enthaltende Mine oder Kreide zum Schreiben, Zeichnen und Malen, also eine Graphitmine oder Graphitkreide, und einen Stift mit einer Graphitmine, oft als Bleistiftmine bezeichneten Mine. Das Graphit und gegebenenfalls weitere Zusatz- oder Füllstoffe sind in einer solchen Mine oder Kreide mit Hilfe eines polymeren Bindemittels bzw. einer Bindemittelmatrix gebunden. Das Polymer ist thermoplastisch, so dass sich die Minen-Ausgangsmasse zu einem Minenstrang extrudieren lässt. Herkömmlicherweise werden für Minen der in Rede stehenden, beispielsweise aus DE 10 2004 021 048 A1 bekannten Art, Polyolefine wie z.B. Polyethylen oder Polypropylen eingesetzt. Neben einer problemlosen Extrudierbarkeit der jeweiligen Ausgangs-Minenmassen ist eine weitere Anforderung an die jeweiligen Minenmassen, dass diese eine relative hohe Menge von Graphit und gegebenenfalls von weiteren Füllstoffen aufnehmen müssen, wobei dadurch aber die geforderten mechanischen Eigenschaften der Mine wie Bruchfestigkeit erhalten bleiben müssen. Die Mine bzw. Kreide muss darüber hinaus eine Konsistenz aufweisen, die einen guten Abstrich, d.h. eine ausreichende Übertragung von Minenmasse auf eine Unterlage ermöglicht. Außerdem soll der Abstrich radierbar sein, sich also von der Unterlage wieder entfernen lassen.

Um eine Mine oder Kreide bzw. eine Minen-/Kreide-Ausgangsmasse hinsichtlich der erwähnten Eigenschaften beeinflussen zu können, werden in der Regel Zusatzstoffe wie Wachse in unterschiedlichen Mengen eingesetzt und die Anteile von Bindemittel, Graphit und sonstigen Füll- und Zusatzstoffen variiert.

Aufgabe der Erfindung ist es, eine Graphit enthaltende Mine oder Kreide und einen Stift mit einer Graphitmine vorzuschlagen, die hinsichtlich der Einstellung eines bestimmten Eigenschaftsprofils eine größere Variabilität aufweist als herkömmliche Graphitminen.

Die erstgenannte Aufgabe wird bei einer Graphit enthaltenden Mine oder Kreide nach Anspruch 1 dadurch gelöst, dass zwei unterschiedliche, d.h. unterschiedliche chemische und physikalische Eigenschaften aufweisende Polymere, nämlich einerseits ein Polyolefin und andererseits Polystyrol, eingesetzt werden. Diese Polymere sind aufgrund der Benzylgruppe des Polystyrols nur schwer mischbar. Es hat sich jedoch überraschenderweise gezeigt, dass sich die beiden Komponenten als Bestandteile einer Minenmasse der vorliegenden Art zusammen mit dem Graphit und weiteren Inhaltsstoffen wie etwa einem Wachs, zu einer homogenen Mischung verarbeiten lassen. Im Folgenden wird vereinfachend vorwiegend auf eine Mine Bezug genommen.

Polystyrol ist beispielsweise vergleichsweise fester und spröder, während Polyolefine eher weicher und elastischer sind. Indem nun die genannten Polymere in unterschiedlichen Verhältnissen gemischt werden, kann die Bindemittelmatrix hinsichtlich des angestrebten Eigenschaftsprofils der Mine selbst verändert werden. Neben den erwähnten Möglichkeiten, die sich durch unterschiedliche Anteile und der Auswahl von Zusatz- und Füllstoffen ergeben, steht somit bei einem erfindungsgemäßen Stift eine weitere Möglichkeit zur Verfügung, das Eigenschaftsprofil der Mine gezielt einzustellen.

Bei einer bevorzugten Ausgestaltung der Mine oder Kreide enthält diese einen Anteil an polymerem Bindemittel, also dem Gemisch von Polystyrol und Polyolefin von 5 Gew.-%bis 70 Gew.-%, wobei vorzugsweise in einem engeren Gehaltsbereich, nämlich mit wenigstens 10 Gew.-% und maximal 60 Gew.-%, gearbeitet wird. Zwar wird durch einen hohen Anteil an polymerem Bindemittel der Abstrich der Mine möglicherweise leicht verschlechtert, jedoch lassen sich dadurch die mechanische Festigkeit, sowie die Spitzbarkeit und Radierbarkeit der Mine deutlich verbessern. Der Anteil des Polyolefins beträgt dabei 0,5 Gew.-% bis 50 Gew.-% und jener des Polystyrols 0,5 Gew.-% bis 40 Gew.-%. Die besten Ergebnisse werden erzielt, wenn der Polyolefingehalt auf 40 Gew.-% und der Polystyrolanteil auf 30 Gew.-% begrenzt werden. Dabei hat sich zudem herausgestellt, dass der Stift bzw. die Mine bei einem Verhältnis von Polystyrol zu Polyolefin zwischen 1:1 und 1:3 hervorragende Schreib- bzw. Abstricheigenschaften aufweist.

Grundsätzlich kommen alle bekannten Polyolefine, wie z.B. Polypropylen, Polyisobutylen oder Polybutylen, als Polyolefin-Komponente des polymeren Bindemittels in Betracht. Besonders geeignet sind jedoch Polyethylene, insbesondere High Density Polyethylene (HDPE), welche eine amorphe, aber gering verzweigte Struktur aufweisen.

Als Polyolefin wird beispielsweise ein Polyolefin verwendet, welches nach ASTM D-1238 einen Schmelzflussindex von 35 ± 5 g/min aufweist. Dabei kann als Polyolefin auch eine Mischung aus zwei oder mehreren verschiedenen Polyolefinen, insbesondere solche mit unterschiedlichen Schmelzflussindizes, verwendet werden. Dabei hat es sich als geeignet erwiesen, wenn der Anteil des Polyolefins mit einem höheren Schmelzpunkt größer ist, als der des Polyolefins mit einem niedrigeren Schmelzpunkt, beispielsweise in einem Verhältnis von 1:1,5 bis 1:25.

Das verwendete Polystyrol weist nach ASTM D-1238 einen Schmelzflussindex von 20 ± 5 g/min auf. Auch als Polystyrol kann eine Mischung aus zwei oder mehreren Polystyrolen mit unterschiedlichen Schmelzflussindizes verwendet werden, wobei sich ein Verhältnis von Polystyrol mit niedrigerem Schmelzflussindex zu Polystyrol mit höherem Schmelzflussindex von 1:0,5 bis 1:12 bewährt hat.

Durch den Einsatz von Polyolefinen bzw. Polystyrol mit unterschiedlichen Schmelzflussindizes, also unterschiedlichen Kettenlängen, lässt sich das Eigenschaftsprofil der Mine weiter variieren. Langkettige Polymere erhöhen die Festigkeit der Mine, wohingegen kurzkettige Polymere das Abstrichverhalten verbessern.

Durch den Graphitanteil in der Mine werden zum einen der Härtegrad der Mine und zum anderen die Schwärze des Abstrichs bestimmt. Um einen tonsatten Abstrich zu erzielen ohne die mechanische Stabilität der Mine merklich zu verschlechtern, ist es von Vorteil, wenn die Mine oder Kreide einen Anteil an Graphit von 10 bis 70 Gew.-%, insbesondere einen Anteil an Graphit von 15 bis 60 Gew.-% enthält.

Neben Graphit, das mit einem Anteil von 10 Gew.-% bis 70 Gew.-% in der Mine enthalten ist und für die im Wesentlichen schwarze Färbung des Minenaufstrichs verantwortlich ist, können Farbmittel, also Pigmente und/oder Farbstoffe, beigemengt sein, die einen farbigen Minenaufstrich ergeben. Beispielsweise kann mit einem Zusatz von Ultramarin (anorganisches Pigment) eine graublaue oder mit einem Zusatz von Pigment Red 254 (organischer Farbstoff) eine rote Graphitmine erzeugt werden.

Die Mine oder Kreide kann weiter ein Wachs enthalten, welches als Klebemittel wirkt und zusätzlich dazu beiträgt, dass sich aus dem Polyolefin und dem Polystyrol eine mechanisch stabile Struktur bildet. Ebenso bestimmt das Wachs in Kombination mit dem Graphit den Härtegrad der Mine mit. Besonders gute Ergebnisse wurden erzielt, wenn die Mine einen Anteil an Wachs von 1 bis 40 Gew.-%, vorzugsweise einen Anteil an Wachs von 5 bis 30 Gew.-% enthält.

Das Wachs ist vorzugsweise ein Polyolefinwachs oder ein Paraffinwachs, z.B. ein Paraffinmicrowachs. Auch eine Kombination aus zwei oder mehreren verschiedenen Wachsen kann zum Einsatz kommen, um eine verbesserte Dispersion des Graphits in dem polymeren Bindemittel und somit eine stabile Struktur zu erzielen. Das eingesetzte Polyolefinwachs ist vorzugsweise polar modifiziert und trägt dadurch zur Verbesserung der mechanischen Stabilität der Mine bei. Dabei hat sich die Verwendung eine Polyolefinwachses mit einem Tropfpunkt zwischen 105 und 130 °C (nach ASTM D-3954), einer Dichte von 0,92 bis 0,97 g/cm³ (nach ASTM D-1505), einer Viskosität nach Brookfield bei 140 °C zwischen 50 und 500 cps und einer mittleren Partikelgröße von 7,5 bis 9,5 µm als geeignet herausgestellt. Die besten Ergebnisse wurden zudem erzielt, wenn das eingesetzte Paraffinmicrowachs einen Tropfpunkt zwischen 90 und 107 °C (nach ASTM D-3954), eine Dichte von 0,86 bis 0,96 g/cm³ (nach ASTM D-1505), eine Viskosität nach Brookfield bei 140 °C zwischen 50 und 500 cps und eine mittlere Partikelgröße von 6 bis 30 µm aufweist. Das eingesetzte mikrokristalline Paraffinmicrowachs enthält sowohl normale als auch verzweigte Paraffine.

Der Anteil an Wachs und polymerem Bindemittel wird dabei insbesondere derart gewählt, dass ein Verhältnis von Wachs zu polymerem Bindemittel in einem Bereich von 1:0,5 und 1:9 liegt. Je höher der Anteil des Wachses in der Mine oder Kreide ist, desto weicher wird die Mine. Ein hoher Anteil an polymerem Bindemittel im Vergleich zum Anteil an Wachs verbessert jedoch die Festigkeit, Radierbarkeit und Spitzbarkeit der Mine, sodass hier eine Abwägung hinsichtlich der Einstellung des Eigenschaftsprofils erfolgen muss. Die besten Ergebnisse werden insbesondere bei einem Verhältnis von Wachs zu polymerem Bindemittel in einem Bereich von 1:0,5 und 1:7 erreicht.

Um eine die Schwärze des Abstrichs zu optimieren, enthält die Mine oder Kreide als Füllstoff vorzugsweise einen Anteil von 1 bis 35 Gew.-% an Ruß oder anderen Schwarzpigmenten.

Des Weiteren enthält die Mine oder Kreide bei einer bevorzugten Ausführungsform 0,1 bis 5 Gew.-% zumindest eines Additivs. Als solches Additiv wird der Mine beispielsweise ein thermoplastisches Elastomer zugesetzt, welches die Flexibilität der Mine erhöht. Weitere Additive, insbesondere hinsichtlich der Verarbeitbarkeit der Minenmasse, stellen Fließzusätze oder Gleitmittel dar, welche als Prozesshilfsmittel die Verformbarkeit der Minenmasse erhöhen. Zudem können Stabilisatoren als Additiv eingesetzt werden, wie z.B. UV-Stabilisatoren oder Wärmestabilisatoren, welche einer Zersetzung des polymeren Bindemittels, also des Polyolefins und des Polystyrols während der Extrusion der Mine entgegenwirken. Für denselben Zweck kommen auch Antioxidantien als Additiv in Betracht.

Die zweitgenannte Aufgabe wird gelöst durch einen Stift mit den Merkmalen gemäß Patentanspruch 15, welche eine Mine mit den vorstehend beschriebenen Merkmalen umfasst. Der Stift weist dabei insbesondere eine Ummantelung aus Holz oder aus einem Holzersatzwerkstoff auf, welche die Mine umhüllt. Besteht die Ummantelung aus einem Holzersatzwerkstoff, einem sogenannten Wood Plastic Compound, kann der Stift beispielsweise durch Co-Extrusion der Mine und der Ummantelung hergestellt werden.

Zur Herstellung der erfindungsgemäßen Mine oder Kreide werden die Ausgangssubstanzen, also Polyolefin und Polystyrol, z.B. in Form eines Granulat, sowie der Graphit und gegebenenfalls weitere zusätzliche Substanzen, zunächst in einem Mischer oder in einem Extruder vermischt. Dabei hat es sich bewährt, zwei aufeinanderfolgende Mischzyklen durchzuführen, um eine möglichst homogene Minenmasse zu erhalten. Während des ersten Mischzyklus, welcher maximal 25 min andauert, werden die Ausgangssubstanzen nicht zusätzlich erwärmt. Die Temperatur von maximal etwa 100 °C entsteht lediglich durch Reibung bei Drehgeschwindigkeiten bis maximal 700 rpm (Umdrehungen pro Minute). Der erste Mischzyklus dient neben der Verteilung der einzelnen Bestandteile der Minenmasse vorwiegend zur Verringerung der Größe der Partikel der Ausgangssubstanzen.

Während des zweiten Mischzyklus wird Temperatur zugeführt, sodass die Minenmasse auf etwa maximal 230 °C erwärmt wird. Des Weiteren wird die Drehgeschwindigkeit auf bis zu maximal 4000 rpm erhöht und die Mischdauer auf maximal 50 min verlängert. Diese Parameter haben sich als besonders geeignet erwiesen, um die Ausgangssubstanzen aufzuschmelzen und eine gute Dispersion des Graphits in dem polymeren Bindemittel zu erzielen. Jeweils im Anschluss an einen Mischzyklus wird die Minenmasse kontrolliert abgekühlt.

In einem nächsten Schritt wird die Minenmasse in einem Extruder bei einer Drehgeschwindigkeit von maximal 1000 rpm und einer Temperatur von maximal 220 °C weiter vermischt und geknetet. Die Verweildauer im Extruder beträgt zwischen 8 und 200 s, um einerseits die Dispersion des Graphits weiter zu fördern und andererseits jedoch gleichzeitig eine Zersetzung des polymeren Bindemittels zu vermeiden.

Mit einer Geschwindigkeit von maximal 150 m/min und unter einem Druck von 30 bis 700 bar wird anschließend ein Minenstrang extrudiert und nachfolgend gekühlt, um dessen Eigenschaften zu stabilisieren. Eine geeignete Methode besteht beispielsweise darin, den Minenstrang zunächst mit Wasser und anschließend mit Druckluft zu kühlen. Um letztlich einzelne Minen zu erhalten, wird der extrudierte Minenstrang abgelängt. Dies erfolgt z.B. mit einem rotierenden Messer, welches einen präzisen Schnitt erzeugt und so übermäßige Abfälle und Späne vermieden werden.

Es hat sich gezeigt, dass die Intensität bzw. die Schwärze des Abstrichs des erfindungsgemäßen Stifts bzw. der Mine der einer gebrannten, keramischen Graphitmine entspricht, jedoch aufgrund der Herstellung der Mine durch Extrusion deutlich homogener ist. Auch das Abstrichverhalten an sich ist dem einer gebrannten Graphitmine ähnlich, jedoch ist es bei der erfindungsgemäßen polymergebundenen Mine möglich, noch deutlich weichere Minen herzustellen.

Die Mine weist außerdem aufgrund der weiteren Variationsmöglichkeit durch den Einsatz von zwei verschiedenen Polymeren eine gegenüber einer gebrannten Graphitmine verbesserte mechanische Festigkeit auf. Aufgrund der Polymere ist die Mine dennoch flexibler und bricht somit zum einen während des Herstellungsprozesses und zum anderen später beim Anwender seltener, wenn sie z.B. herunterfällt. Aufgrund der hohen mechanischen Stabilität und der Flexibilität ist zudem die Spitzbarkeit des Stiftes verbessert, wodurch weniger Stifte beim Spitzvorgang brechen.

Der Durchmesser der Mine lässt sich während des Herstellungsverfahrens gut kontrollieren, sodass die Fertigungstoleranzen des Durchmessers auf Werte zwischen 0,01 und 0,05 mm reduziert werden können. Dies wiederum führt zu einer besseren Haftung, wenn die fertigen Minen zur Fertigstellung des Stiftes in die Nuten der Holzplatten eingelegt und darin verklebt werden.

Der erfindungsgemäße Stift bzw. die erfindungsgemäße Mine oder Kreide erzeugt zudem einen homogenen Abstrich und hinterlässt aufgrund der Weichheit der Mine keine Kratzer im Papier. Er weist also eine gute Radierbarkeit auf und lässt sich leicht wieder von der Unterlage entfernen.

Ein weiterer Vorteil der erfindungsgemäßen Graphitmine oder Kreide besteht darin, dass kein Brennvorgang notwendig ist, was die zur Herstellung der Mine erforderliche Zeit deutlich reduziert. Die Mine weist zudem direkt nach der Extrusion die erforderliche mechanische Stabilität auf und kann sofort weiterverarbeitet werden, also mit einer Stiftummantelung aus Holz oder einem holz-ähnlichen Verbundwerkstoff versehen werden.

Nachfolgend sind vier Beispielrezepturen für eine Graphitmine oder Kreide aufgeführt. Die Ausgangsubstanzen werden in einem Mischer während eines ersten Mischzyklus bei zwischen 15 und 100 °C und während eines zweiten Mischzyklus bei zwischen 100 und 230 °C gemischt. Die Extrusion der Minenmasse zu Minensträngen erfolgt beispielsweise mit einem Einschneckenextruder bei einer Temperatur zwischen 70 und 220 °C. Der extrudierte Minenstrang wird in einer sich an den Extruder anschließenden Kühlstrecke von einigen Metern gekühlt und anschließend auf einzelne Minen mit passender Länge zugeschnitten. Nachfolgend können die extrudierten Minen sofort weiterverarbeitet werden und beispielsweise mit einer Holzummantelung oder auch mit einem Minen-Vorschubmechanismus für mechanische Stifte versehen werden. Die extrudierte Mine kann auch direkt nach der Extrusion und Abkühlung als Kreide, also ohne Ummantelung, verwendet werden.

### Beispiel 1:

| | |
|---|---|
| Polymeres Bindemittel | 29,1 Gew.-% |
| - Polystyrol**¹⁾** | - 13,0 Gew.-% |
| - Polyolefin**²⁾** | - 16,1 Gew.-% |
| Wachs | 30,0 Gew.-% |
| - Paraffinmicrowachs**³⁾** | - 15,0 Gew.-% |
| - Polyolefinwachs**⁴⁾** | - 15,0 Gew.-% |
| Graphitpuder**⁵⁾** | 20,0 Gew.-% |
| Thermoplastisches Elastomer**⁶⁾** | 4,0 Gew.-% |
| schwarzes Pigment/Ruß**⁷⁾** | 16,0 Gew.-% |
| Stabilisatoren**¹⁰⁾** | 0,4 Gew.-% |
| Antioxidantien**¹¹⁾** | 0,5 Gew.-% |

Eine Mine oder Kreide bzw. ein Stift mit einer Mine mit einer Zusammensetzung entsprechend Beispiel 1 weist aufgrund des hohen Wachsanteils von 30 Gew.-% einen geringen Härtegrad auf und zeigt ein sehr gutes Abstrichverhalten.

### Beispiel 2:

| | |
|---|---|
| Polymeres Bindemittel | 21,5 Gew.-% |
| - Polystyrol**¹⁾** | - 7,5 Gew.-% |
| - Polyolefin**²⁾** | - 14 Gew.-% |
| Wachs (Polyolefinwachs**⁴⁾**) | 5,0 Gew.-% |
| Graphitpuder**⁵⁾** | 60 Gew.-% |
| Thermoplastisches Elastomer**⁶⁶⁾** | 5,0 Gew.-% |
| schwarzes Pigment/Ruß**⁷⁾** | 2,0 Gew.-% |
| Fließzusatz/Gleitmittel**⁸⁾** | 4,0 Gew.-% |
| Weichmacher**⁹⁾** | 2,0 Gew.-% |
| Stabilisatoren^{**10**)} | 0,5 Gew.-% |

Aufgrund des hohen Graphitanteils von 60 Gew.-% ist ein Stift bzw. eine Mine oder Kreide mit einer Zusammensetzung entsprechend Beispiel 2 ebenfalls weich und erzeugt einen tonsatten bis tiefschwarzen Abstrich.

### Beispiel 3:

| | |
|---|---|
| Polymeres Bindemittel | 51,2 Gew.-% |
| - Polystyrol**¹⁾** | - 20,0 Gew.-% |
| - Polyolefin**²⁾** | - 31,2 Gew.-% |
| Wachs | 8,0 Gew.-% |
| - Paraffinmicrowachs**³⁾** | - 1,0 Gew.-% |
| - Polyolefinwachs**⁴⁾** | - 7,0 Gew.-% |
| Graphitpuder**⁵⁾** | 15,0 Gew.-% |
| Thermoplastisches Elastomer**⁶⁾** | 1,0 Gew.-% |
| schwarzes Pigment/Ruß**⁷⁾** | 20,0 Gew.-% |
| Fließzusatz/Gleitmittel**⁸⁾** | 2,5 Gew.-% |
| Weichmacher**⁹⁾** | 2,0 Gew.-% |
| Stabilisatoren**¹⁰⁾** | 0,1 Gew.-% |
| Antioxidantien**¹¹⁾** | 0,2 Gew.-% |

Eine Mine oder Kreide bzw. ein Stift mit einer Mine mit einer Zusammensetzung gemäß Beispiel 3 zeichnet sich aufgrund des hohen Anteils an polymerem Bindemittel von etwa 51,2 Gew.-% insbesondere durch eine hervorragende mechanische Festigkeit und eine sehr gute Spitzbarkeit sowie Radierbarkeit aus.

### Beispiel 4:

| | |
|---|---|
| Polymeres Bindemittel | 10,8 Gew.-% |
| - Polystyrol**¹⁾** | - 4,8 Gew.-% |
| - Polyolefin**²⁾** | - 6,0 Gew.-% |
| Wachs (Paraffinmicrowachs**³⁾**) | 11 Gew.-% |
| Graphitpuder**⁵⁾** | 48,7 Gew.-% |
| schwarzes Pigment/Ruß**⁷⁾** | 28,0 Gew.-% |
| Fließzusatz/Gleitmittel**⁸⁾** | 0,5 Gew.-% |
| Weichmacher**⁹⁾** | 0,5 Gew.-% |
| Antioxidantien**¹¹⁾** | 0,5 Gew.-% |

Eine Mine oder Kreide bzw. ein Stift mit einer Mine mit einer Zusammensetzung gemäß Beispiel 4 weist einen hohen Anteil an Graphit sowie den höchsten Anteil an Ruß und den geringsten Anteil an polymerem Bindemittel aller Ausführungsbeispiele auf. Dies resultiert in einem tiefschwarzen Abstrich und einem insgesamt guten Abstrichverhalten bei immer noch ausreichender mechanischer Stabilität der Mine.

### Produktbezeichnungen/Hersteller:

1) RT441M (Innova, Brasilien)
2) PB608 (Braskem, Brasilien)
3) Cera di parafina micro (Petrobras, Brasilien)
4) Licocene PE 3401 (Clariant AG, D-65929 Frankfurt am Main)
5) BFP 90 (Graphit Kropfmuehl GmbH, D-94051 Hauzenberg)
6) Fortiprene TPE (FCC, Brasilien)
7) BP 480 (Cabot Corporation, USA)
8) Ceridust 6721 (Clariant AG, D-65929 Frankfurt am Main)
9), 10), 11) LANXESS AG, D-51369 Leverkusen

## Patentansprüche

1. Mine oder Kreide enthaltend Graphit, bei der das Graphit in einem polymeren Bindemittel gebunden ist, **dadurch gekennzeichnet, dass** das Bindemittel eine Mischung aus einem Polyolefin und Polystyrol ist, wobei das Verhältnis von Polystyrol zu Polyolefin zwischen 1:1 und 1:3 liegt, **dadurch gekennzeichnet, dass** die Mine ein Wachs mit einem Anteil von 1 Gew.-% bis 40 Gew.-% enthält und dass das Wachs ein Paraffinwachs und/oder ein Polyolefinwachs ist.

2. Mine oder Kreide nach Anspruch 1, **gekennzeichnet durch** einen Anteil von 5 Gew.-% bis 70 Gew.-% an polymerem Bindemittel.

3. Mine oder Kreide nach Anspruch 1 oder 2, **dadurch gekennzeichnet, dass** als polymeres Bindemittel 0,5 Gew.-% bis 50 Gew.-% Polyolefin und 0,5 Gew.-% bis 40 Gew.-% Polystyrol enthalten sind.

4. Mine oder Kreide nach Anspruch 3, **dadurch gekennzeichnet, dass** in der Mine maximal 40 Gew.-% Polyolefin und maximal 30 Gew.-% Polystyrol enthalten sind.

5. Mine oder Kreide nach Anspruch 2, **gekennzeichnet durch** einen Anteil an polymerem Bindemittel von 10 Gew.-% bis 60 Gew.-%.

6. Mine oder Kreide nach einem der vorhergehenden Ansprüche, **gekennzeichnet durch** einen Graphitgehalt von 10 Gew.-% bis 70 Gew.-%.

7. Mine oder Kreide nach Anspruch 6, **gekennzeichnet durch** einen Graphitgehalt von 15 Gew.-% bis 60 Gew.-%.

8. Mine oder Kreide nach einem der vorhergehenden Ansprüche, **gekennzeichnet durch** einen Wachsanteil von 5 Gew.-% bis 30 Gew.-%.

9. Mine oder Kreide nach einem der vorhergehenden Ansprüche, **dadurch gekennzeichnet, dass** das Polyolefin ein Polyethylen ist.

10. Mine oder Kreide nach einem der vorhergehenden Ansprüche, **gekennzeichnet durch** ein Verhältnis von Wachs zu polymerem Bindemittel von 1:0,5 bis 1:9, vorzugsweise bis 1:7.

11. Mine oder Kreide nach einem der vorhergehenden Ansprüche, die einen Anteil von 1 bis 35 Gew.-% Ruß enthält.

12. Mine oder Kreide nach einem der vorhergehenden Ansprüche, die einen Anteil von 0,1 bis 5 Gew.-% zumindest eines Additivs enthält.

13. Stift mit einer Mine nach einem der vorhergehenden Ansprüche.

14. Stift nach Anspruch 13, **gekennzeichnet durch** eine Ummantelung aus Holz oder aus einem Holzersatzwerkstoff.

## Claims

1. Lead or chalk containing graphite, in which the graphite is bound in a polymer binding agent, **characterised in that** the binding agent is a mixture of polyolefin and polystyrene, wherein the ratio of polystyrene to polyolefin is between 1:1 and 1:3, **characterised in that** the lead contains a wax in a proportion of from 1% by weight to 40% by weight, and the wax is a paraffin wax and/or a polyolefin wax.

2. Lead or chalk according to claim 1, **characterised by** a proportion of from 5% by weight to 70% by weight of polymer binding agent.

3. Lead or chalk according to claim 1 or 2, **characterised in that**, as a polymer binding agent, 0.5% by weight to 50% by weight of polyolefin and 0.5% by weight to 40% by weight of polystyrene are contained.

4. Lead or chalk according to claim 3, **characterised in that** a maximum of 40% by weight of polyolefin and a maximum of 30% by weight of polystyrene are contained in the lead.

5. Lead or chalk according to claim 2, **characterised by** a proportion of polymer binding agent of from 10% by weight to 60% by weight.

6. Lead or chalk according to one of the preceding claims, **characterised by** a graphite content of from 10% by weight to 70% by weight.

7. Lead or chalk according to claim 6, **characterised by** a graphite content of from 15% by weight to 60% by weight.

8. Lead or chalk according to one of the preceding claims, **characterised by** a wax proportion of from 5% by weight to 30% by weight.

9. Lead or chalk according to one of the preceding claims, **characterised in that** the polyolefin is a polyethylene.

10. Lead or chalk according to one of the preceding claims, **characterised by** a ratio of wax to polymer binding agent of from 1:0.5 to 1:9, preferably to 1:7.

11. Lead or chalk according to one of the preceding claims, which contains a proportion of from 1 to 35% by weight of carbon black.

12. Lead or chalk according to one of the preceding claims, which contains a proportion of from 0.1 to 5% by weight of at least one additive.

13. Pencil having a lead according to one of the preceding claims.

14. Pencil according to claim 13, **characterised by** a casing made of wood or made of a wood substitute material.

## Revendications

1. Mine ou craie contenant du graphite, dans laquelle le graphite est lié dans un liant polymère, **caractérisé en ce que** le liant est un mélange d'une polyoléfine et de polystyrène, le rapport du polystyrène à la polyoléfine étant compris entre 1:1 et 1:3, **caractérisé en ce que** la mine contient une cire en une proportion de 1% en poids à 40% en poids et **en ce que** la cire est une cire de paraffine et/ou une cire de polyoléfine.

2. Mine ou craie suivant la revendication 1, **caractérisée par** une proportion de 5% en poids à 70% en poids de liant polymère.

3. Mine ou craie suivant la revendication 1 ou 2, **caractérisée en ce qu'**il est contenu, comme liant polymère, de 0,5% en poids à 50% en poids de polyoléfine et de 0,5% en poids à 40% en poids de polystyrène.

4. Mine ou craie suivant la revendication 3, **caractérisée en ce qu'**il est contenu dans la mine au maximum 40% en poids de polyoléfine et au maximum 30% en poids de polystyrène.

5. Mine ou craie suivant la revendication 2, **caractérisée par** une proportion de liant polymère de 10% en poids à 60% en poids.

6. Mine ou craie suivant l'une des revendications précédentes, **caractérisée par** une teneur en graphite de 10% en poids à 70% en poids.

7. Mine ou craie suivant la revendication 6, **caractérisée par** une teneur en graphite de 15% en poids à 60% en poids.

8. Mine ou craie suivant l'une des revendications précédentes, **caractérisée par** une proportion de cire de 5% en poids à 30% en poids.

9. Mine ou craie suivant l'une des revendications précédentes, **caractérisée en ce que** la polyoléfine est un polyéthylène.

10. Mine ou craie suivant l'une des revendications précédentes, **caractérisée par** un rapport de la cire au liant polymère de 1:0,5 à 1:9, de préférence à 1:7.

11. Mine ou craie suivant l'une des revendications précédentes, qui contient une proportion de 1) 35% en poids de noir de carbone.

12. Mine ou craie suivant l'une des revendications précédentes, qui contient une proportion de 0,1 à 5% en poids d'au moins un additif.

13. Crayon ayant une mine suivant l'une des revendications précédentes.

14. Crayon suivant la revendication 13, **caractérisé par** une gaine en bois ou en un matériau de substitution du bois.
